# EUROPEAN PATENT SPECIFICATION

(11) **EP 2 544 264 B1**
(45) Date of publication and mention of the grant of the patent: **08.06.2016**
(21) Application number: 12175332.1
(22) Date of filing: 06.07.2012
(51) Int. Cl.: H01M 2/30, H01M 2/34, H01M 2/06

(54) **Rechargeable battery**
Wiederaufladbare Batterie
Batterie rechargeable

(30) Priority: 07.07.2011 US 201161505357 P; 23.02.2012 US 201213403081
(43) Date of publication of application: 09.01.2013
(73) Proprietor: Samsung SDI Co., Ltd., Gyeonggi-do (KR); Robert Bosch GmbH, 70442 Stuttgart (DE)
(72) Inventor: Kim, Duk-Jung, Yongin-si (KR); Kwon, Jae-Ik, Yongin-si (KR); Kim, In, Yongin-si (KR)
(74) Representative: Gulde & Partner

(56) References cited:
- EP-A1- 2 579 357
- EP-A2- 1 246 276
- US-A1- 2010 279 156
- US-B1- 6 377 432

## Description

### BACKGROUND

### 1. Field

The described technology relates generally to a rechargeable battery including an external fuse part according to the preamble of claim 1 and as e.g. disclosed in US 6,377,432 B1, US 2010/279156 A1 and EP 1 246 276 A2.

### 2. Description of the Related Art

A rechargeable battery is a battery that can be repeatedly charged and discharged, unlike a primary battery.

A low-capacity rechargeable battery is used for small portable electronic devices such as a mobile phone, a notebook computer, and a camcoder and a large-capacity rechargeable battery is used as a power supply for driving a motor such as a hybrid car.

The rechargeable battery includes an electrode assembly around which a positive electrode and a negative electrode are wound, having a separator therebetween, a case having the electrode assembly embedded therein, a cap plate sealing an opening of a case, and an electrode terminal electrically connected to the electrode assembly by penetrating through the cap plate.

In the rechargeable battery, excessive heat may be generated or an electrolyte solution may be decomposed in the case due to the repetitive charging and discharging. The heat generation or the electrolyte decomposition may increase the internal pressure of the rechargeable battery. The increase in internal pressure may fire or explode the rechargeable battery.

In order to prevent the firing and explosion of the rechargeable battery due to the increase in internal pressure, an external short part may be provided at the outside of the case. The external short part shorts the negative electrode and the positive electrode of the electrode assembly at the outside of the rechargeable battery when the internal pressure of the rechargeable battery is increased. When the external short part is operated to be short, the charging state of the electrode assembly is reduced due to the discharging of large current. Weak portions at a discharging line connecting the electrode assembly with the electrode terminal may be melted and disconnected due to the discharging of large current.

In order to effectively disconnect the discharging line at the time of the external short or the overcharging, the rechargeable battery may have the fuse part disposed therein. However, after the fuse part is broken due to the melting, arc may be generated at the broken portion when the broken gap is narrow.

The arc generated in the rechargeable battery may affect the electrolyte solution to cause the firing or the explosion of the rechargeable battery, which may degrade the stability of the rechargeable battery.

### SUMMARY

The described technology has been made in an effort to provide a rechargeable battery having a fuse part disposed at the outside thereof so as to maintain stability thereof even when arc is generated after the fuse part is broken, the fuse part being easy to assemble to the battery.

This object is achieved for the battery mentioned in the beginning by the characterizing feature of claim 1.

Due to the through holes and as the second through hole has the larger diameter, a welding torch or a riveting mechanism may be inserted into a contact portion between the first through hole and a terminal, allowing for an easy installation of the plates and the fuse.

An exemplary embodiment provides a rechargeable battery comprising an electrode assembly. The electrode assembly includes a first and a second electrode, a case accommodating the electrode assembly, an electrode terminal member at an exterior of the case and electrically connected to the first electrode. The electrode terminal member comprises a first plate and a second plate spaced apart from each other.

The rechargeable battery further comprises a fuse connecting the first plate and the second plate. The rechargeable battery further comprises a shorting means including a short circuit tab connected to the second plate and a short circuit plate electrically connected to the second electrode, wherein the short circuit plate is spaced apart from the short circuit tab in a normal condition and is deformable into contact with the short circuit tab to electrically connect the first and second electrodes.

The first plate, the fuse, the second plate and the short circuit tab are integrally formed of a unitary piece of sheet metal. The fuse is formed as a bent part connecting ends of the first plate and the second plate, the fuse having a narrower width than that of the first plate and the second plate. Forming the first plate, the fuse, the second plate and the short circuit tab integrally with the fuse being formed as a bent part connecting ends of the first plate and the second plate further facilitates manufacturing the rechargeable battery.The case may further include a cap plate that seals an opening of the case, the fuse being disposed at an exterior of the cap plate. The rechargeable battery may further comprise an insulator embedding the first plate and the short circuit tab, insulating them from the cap plate and filling a space between the first plate and the second plate. The rechargeable battery may further comprise a rivet terminal extending from an interior to an exterior of the case through the cap plate, wherein the first plate includes a first through hole that engages the rivet terminal at the exterior of the case, and the second plate and the insulator respectively include a second plate through hole and a first insulator hole to expose the rivet terminal.

The cap plate may be electrically connected to the second electrode and the short circuit plate may be embedded in the cap plate. The first plate, the second plate, the fuse, the short circuit tab and the insulator may constitute an outer module which is disposed at the exterior of the cap plate. The rivet terminal, an insulating member and a first lead tab may constitute an inner module which is disposed at an interior of the cap plate.

The fuse may be disposed at an exterior of the case. The fuse may be part of the electrode terminal member.

According to exemplary embodiments, the fuse part is provided at the outside of the cap plate, thereby maintaining the stability of the rechargeable battery and enhancing the freedom of design of the fuse part even when the arc is generated after the fuse part is broken.

### BRIEF DESCRIPTION OF THE DRAWINGS

FIG. 1 is a perspective view of a rechargeable battery according to a first exemplary embodiment.
FIG. 2 is a cross-sectional view taken along line I I-II in FIG. 1.
FIGS. 3A and 3B are perspective views of a plate terminal and a fixing member of the rechargeable battery according to the first embodiment.
FIGS. 4A and 4B are perspective views in a state of insert-molding the plate terminal and the fixing member of the rechargeable battery according to the first embodiment.
FIG. 5 is a cross-sectional view showing a state of connecting a rivet terminal connected to an electrode assembly to the plate terminal through a terminal hole of a cap plate of the rechargeable battery according to the first embodiment.
FIG. 6 is a cross-sectional view of a rechargeable battery according to a second exemplary embodiment.
FIGS. 7A and 7B are perspective views of a plate terminal and a fixing member of the rechargeable battery according to the second embodiment.
FIGS. 8A and 8B are perspective views in a state of insert-molding the plate terminal and the fixing member of the rechargeable battery according to the second embodiment.
FIG. 9 is a cross-sectional view showing a state of connecting a rivet terminal connected to an electrode assembly to the plate terminal through a terminal hole of a cap plate of the rechargeable battery according to the second embodiment.

### DETAILED DESCRIPTION

The present invention will be described more fully hereinafter with reference to the accompanying drawings, in which exemplary embodiments of the invention are shown.

Like reference numerals designate like elements throughout the specification.

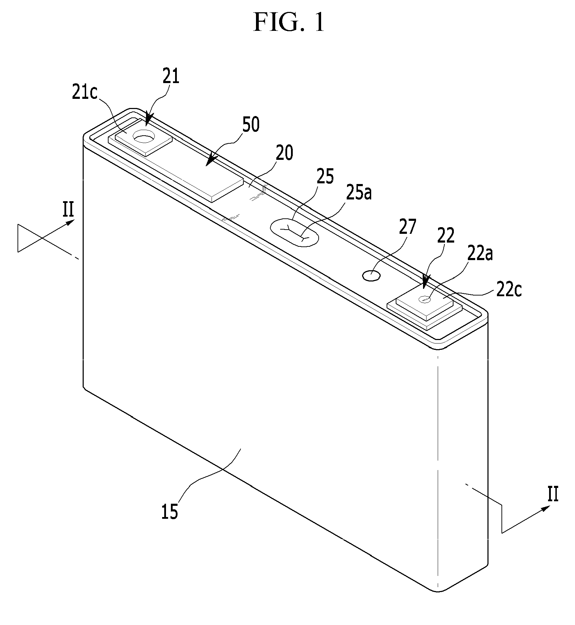

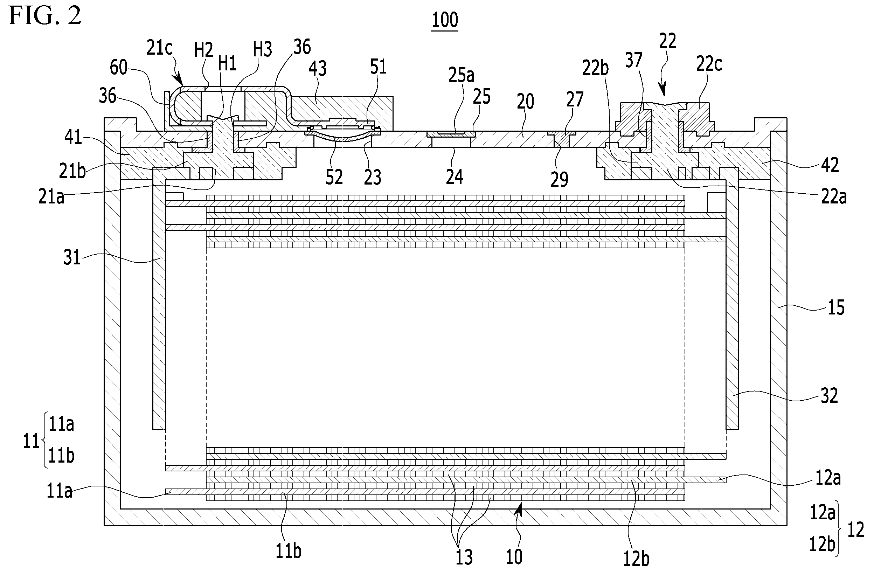

FIG. 1 is a perspective view of a rechargeable battery according to a first exemplary embodiment and FIG. 2 is a cross-sectional view taken along line II-II in FIG. 1.

Referring to FIGS. 1 and 2, a rechargeable battery according to a first exemplary embodiment includes an electrode assembly 10 that charges and discharges current, a case 15 accommodating the electrode assembly 10, a cap plate 20 that is coupled with an opening of the case 15, a first terminal (hereinafter, referred to as a "negative terminal") 21 and a second terminal (hereinafter, referred to as a "positive terminal") 22 that are disposed on the cap plate 20, an external short part 50 and a fuse part 60 that are disposed at a negative terminal 21 side.

For example, the electrode assembly 10 is formed by disposing the first electrode (hereinafter, referred to as a "negative electrode") 11 and a second electrode (hereinafter, referred to as a "positive electrode") 12 on both sides of an insulator, that is, a separator 13 and winding the negative electrode 11, the separator 13, and the positive electrode 12 in a jelly roll shape.

In addition, the electrode assembly is assembled by stacking the positive electrode and the negative electrode configured of a single plate, having a separator therebetween, but may be assembled by stacking the negative electrode, the separator, and the positive electrode in a zigzag way (not shown).

The negative electrode 11 and the positive electrode 12 each include coated parts 11 b and 12b formed by applying an active material to a current collector of a metal plate and uncoated parts 11 a and 12a formed as a current collector exposed by not applying the active material.

The uncoated part 11 a of the negative electrode 11 is disposed at one end of the negative electrode 11 along the wound negative electrode 11. The uncoated part 12a of the positive electrode 12 is disposed at one end of the positive electrode 12 along the wound positive electrode 12. The uncoated parts 11 a and 12a are each disposed at both ends of the electrode assembly 10.

For example, the case 15 is formed in an approximately rectangular parallelepiped so as to form a space receiving the electrode assembly 10 and an electrolyte inside and has an opening connecting the outer space with the inner space formed on one surface of the rectangular parallelepiped. The opening may allow the electrode assembly 10 to be inserted into the case 15.

The cap plate 20 is formed of a thin steel sheet to be inserted into the opening of the case 15, thereby sealing the case 15. The cap plate 20 further includes an electrolyte inlet 29 and a vent hole 24. The electrolyte inlet 29 can inject the electrolyte into the case 15 after the cap plate 20 is coupled with the case 15. After injecting the electrolyte, the electrolyte inlet 29 is sealed with a sealing closure 27.

The vent hole 24 is sealed with the vent plate 25 so as to discharge the internal pressure of the rechargeable battery. When the internal pressure of the rechargeable battery reaches a predetermined value, the vent plate 25 is incised to open the vent hole 24. The vent plate 25 has a notch 25a inducing the incision.

The negative terminal 21 and the positive terminal 22 are installed to penetrate through the cap plate 20 and are electrically connected to the electrode assembly 10. That is, the negative terminal 21 is electrically connected to the negative electrode 11 of the electrode assembly 10 and the positive terminal 22 is electrically connected to the positive electrode 12 of the electrode assembly 10. Therefore, the electrode assembly 10 is drawn out to the outside of the case 15 through the negative terminal 21 and the positive terminal 22.

Since the negative terminal 21 and the positive terminal 22 have the same structure in the cap plate 20, the same structure will be described together and since they have different structures at the outside of the cap plate 20, the different structures will be separately described.

The negative and positive terminals 21 and 22 include rivet terminals 21 a and 22a installed in the terminal hole of the cap plate 20, flanges 21 b and 22b integrally widely formed in the rivet terminals 21 a and 22a in the cap plate 20, and plate terminals 21 c and 22c disposed at the outside of the cap plate 20 and connected to the rivet terminals 21 a and 22a by riveting or welding. The plate terminals 21 c and 22c are formed to have different structures, and therefore, each of them will be described below.

Negative and positive gaskets 36 and 37 are disposed between the rivet terminals 21 a and 22a of the positive and negative terminals 21 and 22 and the inner surface of the terminal hole of the cap plate 20, to seal between the rivet terminals 21 a and 22a of the positive and negative terminals 21 and 22 and the cap plate 20. The negative and positive gaskets 36 and 37 are more extendedly mounted between the flanges 21 b and 22b and the inner surface of the cap plate 20 to better seal between the flanges 21 b and 22b and the cap plate 20. That is, the negative and positive gaskets 36 and 37 install the positive and negative terminals 21 and 22 on the cap plate 20 to prevent the electrolyte from being leaked through the terminal hole.

Negative and positive lead tabs 31 and 32 electrically connect the negative and positive electrodes 11 and 12 of the electrode assembly to the negative and positive terminals 21 and 22. That is, the negative and positive lead tabs 31 and 32 are connected to the bottom ends of the rivet terminals 21 a and 22a while being supported by the flanges 21b and 22b, by coupling the negative and positive lead tabs 31 and 32 to the bottom ends of the rivet terminals 21 a and 22a to caulk the bottom ends thereof.

The negative and positive insulating members 41 and 42 are installed between the negative and positive lead tabs 31 and 32 and the cap plate 20 to electrically insulate the negative and positive lead tabs 31 and 32 from the cap plate 20. In addition, one side of each of the negative and positive insulating members 41 and 42 is coupled to the cap plate 20 and the other side thereof surrounds the negative and positive lead tabs 31 and 32, the rivet terminals 21 a and 22a, and the flanges 21b and 22b, thereby stabilizing the connection structure thereof.

Meanwhile, the external short part 50 is provided at the negative terminal 21 and the fuse part 60 is provided at the plate terminal 21 c of the negative terminal 21. Therefore, the plate terminal 21 c of the negative terminal 21 will be described first and then the fuse part 60 and the external short part 50 will be described in connection with the plate terminal 21 c.

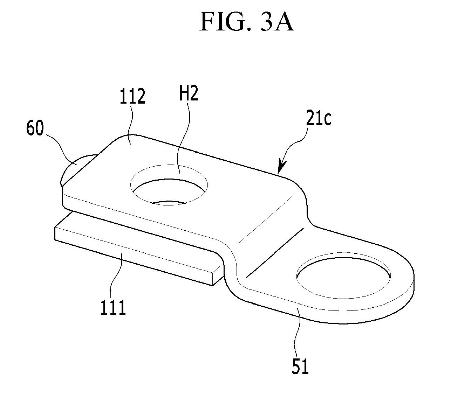

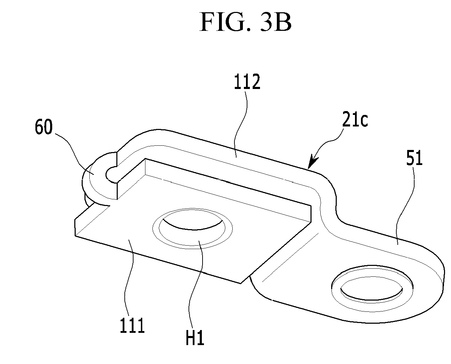

FIGS. 3A and 3B are perspective views of the plate terminal 21 c and the fixing member 51 of the rechargeable battery according to the first embodiment. Referring to FIGS. 2, 3A, and 3B, the plate terminal 21 c includes a first plate 111 electrically connected to the negative electrode 11 of the electrode assembly 10 and a second plate 112 that is spaced from and in parallel with the first plate 111.

Meanwhile, the external short part 50 includes a fixing member 51 bent at the second plate 112, having a height and a short plate 52 provided at the short hole 23 of the cap plate 20 electrically connected to the positive electrode 12 of the electrode assembly 10.

At the positive terminal 22, the plate terminal 22c is mounted on the outer surface of the cap plate 20 and the rivet terminal 22a is connected to the plate terminal 22c by welding or riveting, such that the cap plate 20 and the short plate 52 have positive polarity.

At the plate terminal 21 c of the negative terminal 21, the first plate 111 has a first through hole H1 and is connected by welding or riveting to the rivet terminal 21 a inserted into the first through hole H1. The second plate 112 is connected to the first plate 111 via the fuse part 60.

The second plate 112 has a second through hole H2 corresponding to the first through hole H1 and with a larger diameter than that of the first through hole H1.

The second through hole H2 is formed to have a large diameter, allowing a welding torch or a riveting mechanism to be inserted into a contact portion between the first through hole H1 and the rivet terminal 21 a.

The fuse part 60 is formed to have a narrower width than those of the first and the second plates 111 and 112 to be first broken during discharging of high current. The plate terminal 21 c forms the first and second plates 111 and 112 by cutting a sheet metal and curving the sheet metal at the fuse part 60. The machineability of the fuse part 60 is improved and the costs and weight are reduced.

The fixing member 51 that has negative polarity is spaced from and faces the short plate 52 that has positive polarity. The fixing member 51 is formed of a sheet metal integrated with the plate terminal 21 c. The short plate 52 is welded to the short hole 23 to be convexedly formed toward the inner portion of the case 15.

Therefore, when the rechargeable battery operates normally, the short plate 52 maintains a distance from the fixing member 51. When the internal pressure of the rechargeable battery is abnormally increased, the short plate 52 is inverted by the internal pressure to contact the fixing member 51. That is, the negative electrode 11 and the positive electrode of the electrode assembly 10 are shorted at the outside of the rechargeable battery.

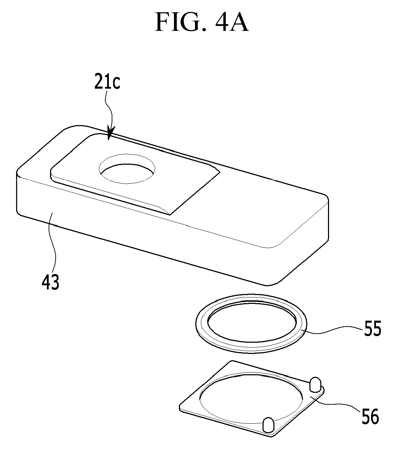

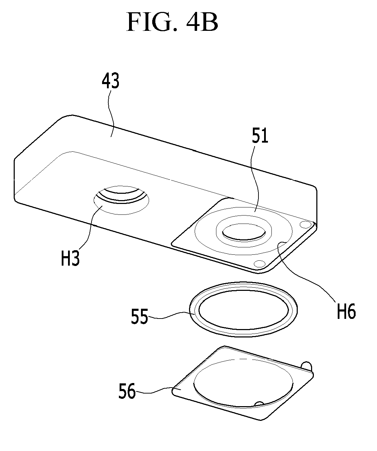

FIGS. 4A and 4B are perspective views showing the plate terminal 21 c and the fixing member 51 that are insert-molded, of the rechargeable battery according to the first embodiment. Referring to FIGS. 2, 4A, and 4B, the plate terminal 21 c and the fixing member 51 are partially embedded in the insulator 43 by insert molding.

For example, the first plate 111 and the fixing member 51 of the plate terminal 21 c are embedded in the insulator 43. A third through hole H3 is formed in the insulator and is connected to the first through hole H1 of the first plate 111. Therefore, the rivet terminal 21 a is inserted into the third through hole H3 and the first through hole H1 through the terminal hole of the cap plate 20. The top end of the rivet terminal 21 a is protruded to the top surface of the first plate 111 to be connected to the first through hole H1 of the first plate 111 by riveting.

The second plate 112 may be exposed to the outside of the insulator 43 to be connected to a bus bar (not shown). Since the fuse part 60 is exposed to the outside while being received at one side of the insulator 43, the fuse part 60 is broken at the outside of the case at the time of discharging of high current, and does not affect the inside of the case 15 even when an arc is generated after the fuse part 60 is broken. In addition, the design degrees of freedom of the fuse part 60 are increased and the problem of reduction in the mechanical strength thereof is solved.

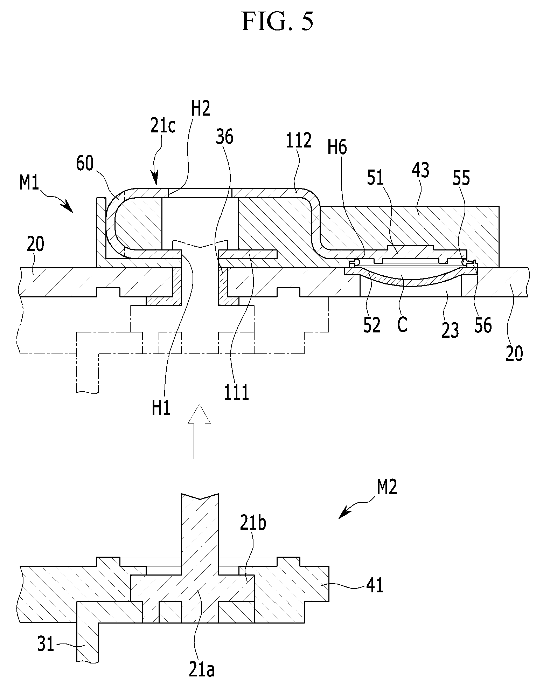

FIG. 5 is a cross-sectional view showing a state in which the rivet terminal 21 a connected to the electrode assembly 10 is connected to the plate terminal 21 c through the terminal hole of the cap plate 20 of the rechargeable battery according to the first embodiment.

There is provided an empty space C between the fixing member 51 and the short plate 52. The fixing member 51 is embedded in the insulator 43, such that the space C is not affected by the change in external pressure, thereby maintaining a predetermined pressure. That is, even when the external pressure is lowered due to a move of the rechargeable battery and a change in the environment in which the rechargeable battery is used, the short plate 52 is prevented from being inverted by the external pressure and then contacting the fixing member 51, which may lead to a short circuit.

In addition, sixth through hole H6 corresponding to the short plate 52 is formed in the insulator 43 and the sixth through hole H6 is filled by the fixing member 51. The sealing 55 is provided at an edge of the fixing member 51 along the sixth through hole H6. The bottom cover 56 supports the sealing 55 to be coupled with the insulator 43. The sealing 55 and the bottom cover 56 seals the area between the insulator 43 and the cap plate 20.

Referring to FIG. 5, the plate terminal 21 c provided at the outside of the cap plate 20, the fuse part 60, and the fixing member 51, as well as the insulator 43 embedding them form a single module, that is, an external module M1.

The rivet terminal 21 a, the negative insulating member 41, and the negative lead tab 31 at the negative terminal 21 provided in the cap plate 20 form another module, that is, an inner module M2.

Further, the inner module M2 is similarly formed at the positive terminal 22 side and includes the electrode assembly 10 connected to the negative and positive lead tabs 31 and 32.

Therefore, the inner module M2, the cap plate 20, and the outer module M1 are integrally assembled by preparing the inner module M2 (drawn in solid lines) and the outer module M1, inserting the rivet terminal 21 a of the inner module M2 (drawn in dotted lines) into the terminal hole of the cap plate 20, having the negative gasket 36 therebetween, and riveting the rivet terminal 21 a to the first through hole H1 of the first plate 111 of the outer module M1. Therefore, it becomes easier to assemble the cap plate 20.

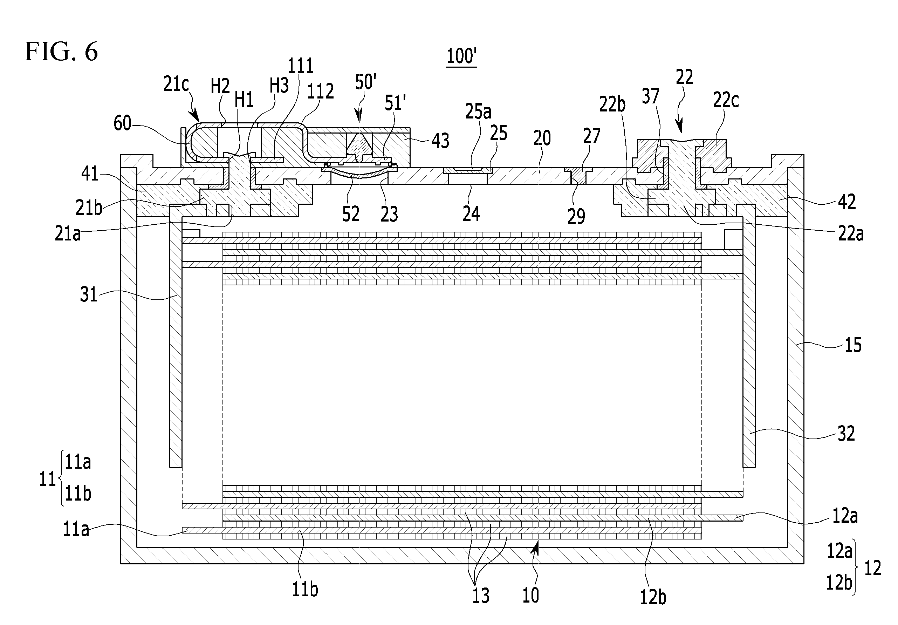

FIG. 6 is a cross-sectional view of a rechargeable battery according to a second embodiment.

The rechargeable battery 100' according to a second exemplary embodiment includes an electrode assembly 10 that charges and discharges current, a case 15 accommodating the electrode assembly 10, a cap plate 20 that is coupled with an opening of the case 15, a first terminal (hereinafter, referred to as a "negative terminal") 21 and a second terminal (hereinafter, referred to as a "positive terminal") 22 that are disposed on the cap plate 20, an external short part 50' and a fuse part 60 that are disposed at a negative terminal 21 side. The elements of the rechargeable battery according to the second embodiment are identical or similar to the first embodiment, except for the external short part 50', thus the description thereof will be omitted. Hereinafter, the external short part 50' and the fuse part 60 will be described.

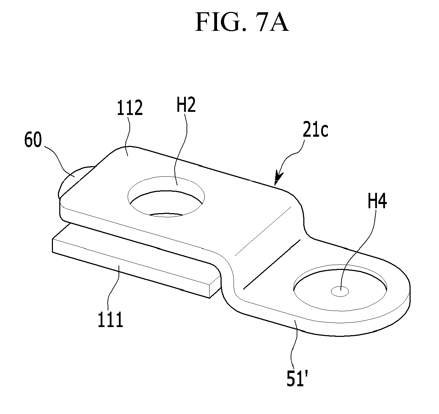

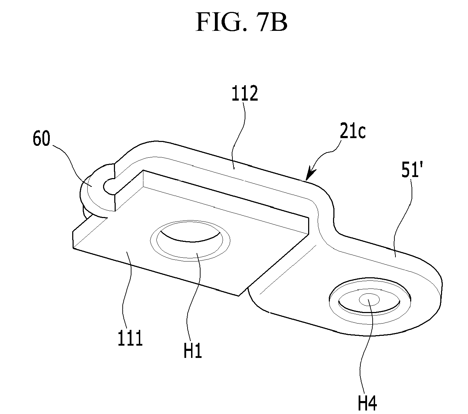

FIGS. 7A and 7B are perspective views of the plate terminal 21 c and the fixing member 51' of the rechargeable battery according to the second embodiment. Referring to FIGS. 6, 7A, and 7B, the plate terminal 21 c includes a first plate 111 electrically connected to the negative electrode 11 of the electrode assembly 10 and a second plate 112 that is spaced from and in parallel with the first plate 111.

Meanwhile, the external short part 50' includes a fixing member 51' bent at the second plate 112, having a height and a short plate 52 provided at the short hole 23 of the cap plate 20 electrically connected to the positive electrode 12 of the electrode assembly 10.

At the positive terminal 22, the plate terminal 22c is mounted on the outer surface of the cap plate 20 and the rivet terminal 22a is connected to the plate terminal 22c by welding or riveting, such that the cap plate 20 and the short plate 52 have positive polarity.

At the plate terminal 21 c of the negative terminal 21, the first plate 111 has a first through hole H1 and is connected by welding or riveting to the rivet terminal 21 a inserted into the first through hole H1. The second plate 112 is connected to the first plate 111 via the fuse part 60.

The second plate 112 has a second through hole H2 corresponding to the first through hole H1 and with a larger diameter than that of the first through hole H1.

The second through hole H2 is formed to have a large diameter, allowing a welding torch or a riveting mechanism to be inserted into a contact portion between the first through hole H1 and the rivet terminal 21 a.

The fuse part 60 is formed to have a narrower width than those of the first and the second plates 111 and 112 to be first broken during discharging of high current. The plate terminal 21 c forms the first and second plates 111 and 112 by cutting a sheet metal and curving the sheet metal at the fuse part 60. The machineability of the fuse part 60 is improved and the costs and weight are reduced.

The fixing member 51' that has negative polarity is spaced from and faces the short plate 52 that has positive polarity. The fixing member 51' is formed of a sheet metal integrated with the plate terminal 21 c. The short plate 52 is welded to the short hole 23 to be convexedly formed toward the inner portion of the case 15.

Therefore, when the rechargeable battery operates normally, the short plate 52 maintains a distance from the fixing member 51'. When the internal pressure of the rechargeable battery is abnormally increased, the short plate 52 is inverted by the internal pressure to contact the fixing member 51'. That is, the negative electrode 11 and the positive electrode of the electrode assembly 10 are shorted at the outside of the rechargeable battery.

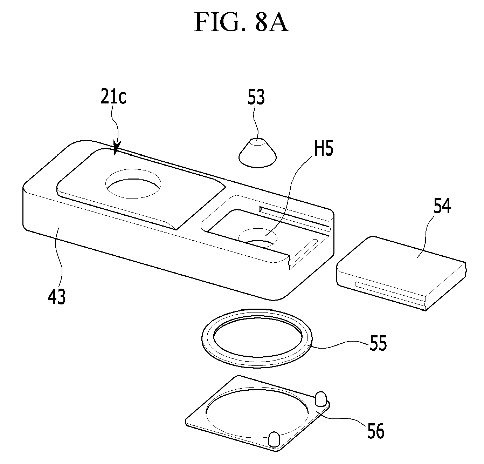

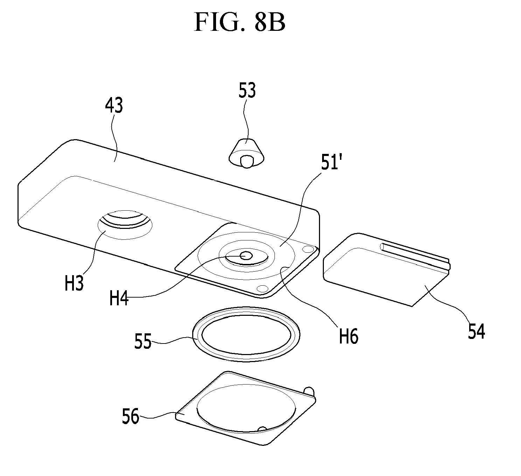

FIGS. 8A and 8B are perspective views showing the plate terminal 21 c and the fixing member 51' that are insert-molded, of the rechargeable battery according to the second embodiment. Referring to FIGS. 6, 8A, and 8B, the plate terminal 21c and the fixing member 51' are partially embedded in the insulator 43 by insert molding.

For example, the first plate 111 and the fixing member 51' of the plate terminal 21 c are embedded in the insulator 43. A third through hole H3 is formed in the insulator and is connected to the first through hole H1 of the first plate 111. Therefore, the rivet terminal 21 a is inserted into the third through hole H3 and the first through hole H1 through the terminal hole of the cap plate 20. The top end of the rivet terminal 21 a is protruded to the top surface of the first plate 111 to be connected to the first through hole H1 of the first plate 111 by riveting.

The second plate 112 may be exposed to the outside of the insulator 43 to be connected to a bus bar (not shown). Since the fuse part 60 is exposed to the outside while being received at one side of the insulator 43, the fuse part 60 is broken at the outside of the case at the time of discharging of high current, and does not have affect the inside of the case 15 even when an arc is generated after the fuse part 60 is broken. In addition, the design degrees of freedom of the fuse part 60 are increased and the problem of reduction in the mechanical strength thereof is solved.

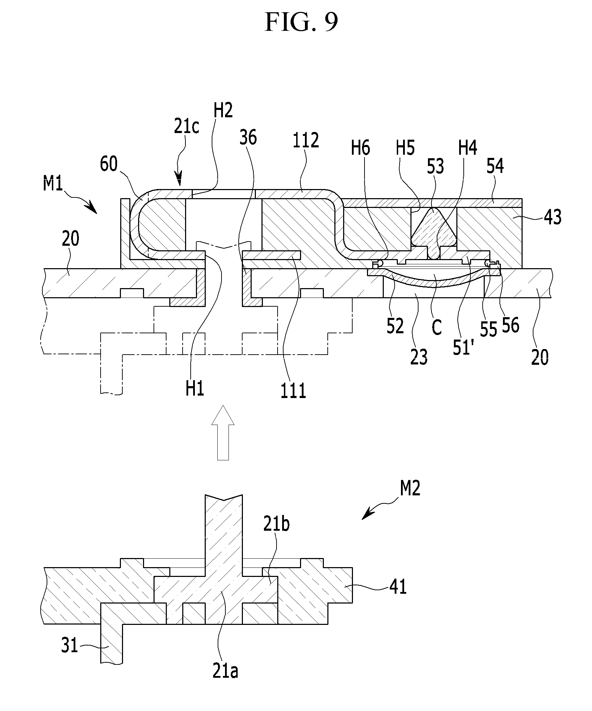

FIG. 9 is a cross-sectional view showing a state in which the rivet terminal 21 a connected to the electrode assembly 10 is connected to the plate terminal 21 c through the terminal hole of the cap plate 20 of the rechargeable battery according to the second embodiment. Referring to FIGS. 7A to 9, the fixing member 51' of the external short part 50' has a fourth through hole H4 corresponding to the center of the short plate 52, and the insulator 43 has a fifth though hole H5 corresponding to the fourth through hole H4.

There is provided an empty space C between the fixing member 51' and the short plate 52. The fourth and fifth through holes H4 and H5 are sealed by the sealing closure 53, such that the space C is not affected by the change in external pressure, thereby maintaining a predetermined pressure. That is, even when the external pressure is lowered due to a move of the rechargeable battery and a change in the environment in which the rechargeable battery is used, the short plate 52 is prevented from being inverted by the external pressure and then contacting the fixing member 51', which may lead to a short circuit.

The sealing closure 53 forms the sealing structure of the fourth and fifth through holes H4 and H5 while maintaining the compression state by a lid 54 slidably coupled at the top side of the insulator 43. The sealing closure 53 may be made of an elastic material, for example, synthetic resin or rubber.

In addition, sixth through hole H6 corresponding to the short plate 52 is formed in the insulator 43 and the sixth through hole H6 is filled by the fixing member 51'. The sealing 55 is provided at an edge of the fixing member 51' along the sixth through hole H6. The bottom cover 56 supports the sealing 55 to be coupled with the insulator 43. The sealing 55 and the bottom cover 56 seals the area between the insulator 43 and the cap plate 20.

Referring to FIG. 9, the plate terminal 21 c provided at the outside of the cap plate 20, the fuse part 60, and the fixing member 51', as well as the insulator 43 embedding them form a single module, that is, an external module M1.

The rivet terminal 21 a, the negative insulating member 41, and the negative lead tab 31 at the negative terminal 21 provided in the cap plate 20 form another module, that is, an inner module M2.

Further, the inner module M2 is similarly formed at the positive terminal 22 side and includes the electrode assembly 10 connected to the negative and positive lead tabs 31 and 32.

Therefore, the inner module M2, the cap plate 20, and the outer module M1 are integrally assembled by preparing the inner module M2 (drawn in solid lines) and the outer module M1, inserting the rivet terminal 21 a of the inner module M2 (drawn in dotted lines) into the terminal hole of the cap plate 20, having the negative gasket 36 therebetween, and riveting the rivet terminal 21 a to the first through hole H1 of the first plate 111 of the outer module M1. Therefore, it becomes easier to assemble the cap plate 20.

**<Description of symbols>**

| | | | |
|---|---|---|---|
| 10 : | Electrode assembly | 11: | First electrode(negative electrode) |
| 11b, 12b : | Coated part | 11a, 12a : | Uncoated part |
| 12: | Second electrode (positive electrode) | 13: | Separator |
| 15: | Case | 20: | Cap plate |
| 21: | First terminal(negative terminal) | 21a, 22a: | Rivet terminal |
| 21b, 22b : | Flange | 21c, 22c : | Plate terminal |
| 22: | Second terminal(Positive terminal) | 23: | Short hole |
| 24: | Vent hole | 25: | Vent plate |
| 25a: | Notch | 27: | Sealing closure |
| 29: | Electrolyte inlet | 31, 32: | Negativeand positive electrode lead tabs |
| 36, 37: | Negative and positive gaskets | 41, 42: | Negative and positive insulating members |
| 43: | Insulator | 50, 50': | External short part |
| 51, 51': | Fixing member | 52: | Short plate |
| 53 : | Sealing closure | 55: | sealing |
| 56: | Bottom cover | 60: | Fuse part |
| 111, 112: | First and second plates | C: | Space |
| H1, H2, H3: | First, second, | | |
| | and third through holes | | |
| H4, H5, H6: | Fourth, fifth, and | | |
| | sixth through holes | | |
| M1: | External module | M2: | Internal module |

## Claims

1. A rechargeable battery comprising: an electrode assembly (10) comprising
a first and a second electrode (11, 12);
a case (15) accommodating the electrode assembly;
an electrode terminal member (21c) at an exterior of the case (15) and electrically connected to the first electrode (11);
wherein the electrode terminal member (21 c) comprises a first plate (111) and a second plate (112) spaced apart from each other,
the rechargeable battery further comprising a fuse (60) connecting the first plate (111) and the second plate (112), wherein
the case (15) further includes a cap plate (20) that seals an opening of the case, the fuse (60) being disposed at an exterior of the cap plate,
the rechargeable battery further comprising an insulator (43) embedding the first plate (111) and a short circuit tab (51, 51'), insulating them from the cap plate (20) and filling a space between the first plate and the second plate (112),
the rechargeable battery further comprising a rivet terminal (21 a) extending from an interior to an exterior of the case (15) through the cap plate (20), wherein:
the first plate (111) includes a first through hole (H1) that engages the rivet terminal at the exterior of the case, and
the second plate (112) and the insulator (43) respectively include a second plate through hole (H2) and a first insulator hole (H3) to expose the rivet terminal, wherein
the rechargeable battery further comprises a shorting means (50, 50') including the short circuit tab (51, 51') connected to the second plate (112) and a short circuit plate (52) electrically connected to the second electrode (12), wherein the short circuit plate is spaced apart from the short circuit tab in a normal condition and is deformable into contact with the short circuit tab to electrically connect the first and second electrodes (11, 12),
**characterized in that**
the first plate (111), the fuse (60), the second plate (112) and the short circuit tab (51, 51') are integrally formed of a unitary piece of sheet metal, wherein
the fuse (60) is formed as a bent part connecting ends of the first plate (111) and the second plate (112), the fuse having a narrower width than that of the first plate and the second plate.

2. The rechargeable battery as claimed in claim 1, wherein the cap plate (20) is electrically connected to the second electrode (12) and the short circuit plate (52) is embedded in the cap plate.

3. The rechargeable battery as claimed in claim1 or 2, wherein:
the first plate (111), the second plate (112), the fuse (60), the short circuit tab (51, 51') and the insulator (43) constitute an outer module which is disposed at the exterior of the cap plate (15).

4. The rechargeable battery as claimed in one of the claims 1 - 3, wherein:
the rivet terminal (21a), an insulating member (41) and a first lead tab (31) constitute an inner module which is disposed at an interior of the cap plate (15).

5. The rechargeable battery as claimed in one of the claims 1 - 4, wherein the fuse (60) is disposed at an exterior of the case (15).

6. The rechargeable battery as claimed in one of the claims 1 - 5, wherein the fuse (60) is part of the electrode terminal member (21c).

## Patentansprüche

1. Eine wiederaufladbare Batterie, aufweisend: eine Elektrodenanordnung (10), aufweisend
eine erste und eine zweite Elektrode (11, 12);
ein Gehäuse (15), das die Elektrodenanordnung aufnimmt;
ein Elektrodenanschlusselement (21c) an einer Außenseite des Gehäuses (15), das mit der ersten Elektrode (11) elektrisch verbunden ist;
wobei das Elektrodenanschlusselement (21c) eine erste Platte (111) und eine zweite Platte (112), die voneinander beabstandet sind, aufweist,
wobei die wiederaufladbare Batterie ferner eine Sicherung (60), die die erste Platte (111) und die zweite Platte (112) verbindet, aufweist, wobei das Gehäuse (15) ferner eine Deckplatte (20), die eine Öffnung des Gehäuses abdichtet, aufweist, wobei die Sicherung (60) an einer Außenseite der Deckplatte angeordnet ist,
die wiederaufladbare Batterie ferner einen Isolator (43), der die erste Platte (111) und einen Kurzschlussstreifen (51, 51') einbettet, sie von der Deckplatte (20) isoliert und einen Raum zwischen der ersten Platte und der zweiten Platte (112) füllt, aufweist,
die wiederaufladbare Batterie ferner einen Nietanschluss (21a), der sich durch die Deckplatte (20) von einer Innenseite zu einer Außenseite des Gehäuses (15) erstreckt, aufweist, wobei:
die erste Platte (111) ein erstes Durchgangsloch (H1), das an der Außenseite des Gehäuses in den Nietanschluss eingreift, aufweist; und
die zweite Platte (112) und der Isolator (43) jeweils ein zweites Plattendurchgangsloch (H2) und ein erstes Isolatorloch (H3) zum Freilegen des Nietanschlusses aufweisen, wobei
die wiederaufladbare Batterie ferner ein Kurzschlussmittel (50, 50') aufweist, das den Kurzschlussstreifen (51, 51'), der mit der zweiten Platte (112) verbunden ist, und eine Kurzschlussplatte (52), die mit der zweiten Elektrode (12) elektrisch verbunden ist, aufweist, wobei die Kurzschlussplatte unter einer normalen Bedingung vom Kurzschlussstreifen beabstandet ist und verformbar ist, sodass sie mit dem Kurzschlussstreifen in Kontakt kommt, um die erste und zweite Elektrode (11, 12) elektrisch miteinander zu verbinden,
**dadurch gekennzeichnet, dass**
die erste Platte (111), die Sicherung (60), die zweite Platte (112) und der Kurzschlussstreifen (51, 51') aus einem einheitlichen Stück Metallblech einstückig ausgebildet sind, wobei
die Sicherung (60) als ein gebogener Teil, der Enden der ersten Platte (111) und der zweiten Platte (112) miteinander verbindet, ausgebildet ist, wobei die Sicherung eine kleinere Breite als die erste Platte und die zweite Platte aufweist.

2. Die wiederaufladbare Batterie wie in Anspruch 1 beansprucht, wobei die Deckplatte (20) mit der zweiten Elektrode (12) elektrisch verbunden ist und die Kurzschlussplatte (52) in der Deckplatte eingebettet ist.

3. Die wiederaufladbare Batterie wie in Anspruch 1 oder 2 beansprucht, wobei:
die erste Platte (111), die zweite Platte (112), die Sicherung (60), der Kurzschlussstreifen (51, 51') und der Isolator (43) ein äußeres Modul, das auf der Außenseite der Deckplatte (15) angeordnet ist, bilden.

4. Die wiederaufladbare Batterie wie in einem der Ansprüche 1-3 beansprucht, wobei:
der Nietanschluss (21a), ein Isolierelement (41) und ein erster Leitungsstreifen (31) ein inneres Modul, das auf einer Innenseite der Deckplatte (15) angeordnet ist, bilden.

5. Die wiederaufladbare Batterie wie in einem der Ansprüche 1-4 beansprucht, wobei die Sicherung (60) auf einer Außenseite des Gehäuses (15) angeordnet ist.

6. Die wiederaufladbare Batterie wie in einem der Ansprüche 1-5 beansprucht, wobei die Sicherung (60) Teil des Elektrodenanschlusselements (21c) ist.

## Revendications

1. Batterie rechargeable comprenant : un ensemble d'électrodes (10) comprenant :
une première et une seconde électrode (11, 12) ;
un boîtier (15) logeant l'ensemble d'électrodes ;
un élément de borne d'électrode (21c) au niveau d'un extérieur du boîtier (15) et électriquement raccordé à la première électrode (11) ;
dans laquelle l'élément de borne d'électrode (21c) comprend une première plaque (111) et une seconde plaque (112) espacées l'une de l'autre,
la batterie rechargeable comprenant en outre un fusible (60) raccordant la première plaque (111) et la seconde plaque (112), dans laquelle :
le boîtier (15) comprend en outre une plaque de capuchon (20) qui scelle une ouverture du boîtier, le fusible (60) étant disposé au niveau d'un extérieur de la plaque de capuchon,
la batterie rechargeable comprenant en outre un isolant (43) encastrant la première plaque (111) et une languette de court-circuit (51, 51'), les isolant de la plaque de capuchon (20) et remplissant un espace entre la première plaque et la seconde plaque (112),
la batterie rechargeable comprenant en outre une borne de rivet (21a) s'étendant d'un intérieur à un extérieur du boîtier (15) à travers la plaque de capuchon (20), dans laquelle :
la première plaque (111) comprend un premier trou traversant (H1) qui met en prise la borne de rivet à l'extérieur du boîtier, et
la seconde plaque (112) et l'isolant (43) comprennent respectivement un second trou traversant de plaque (H2) et un premier trou d'isolant (H3) pour exposer la borne de rivet,
la batterie rechargeable comprenant en outre un moyen de court-circuitage (50, 50') comprenant la languette de court-circuit (51, 51') raccordée à la seconde plaque (112) et une plaque de court-circuit (52) électriquement raccordée à la seconde électrode (12), la plaque de court-circuit étant espacée de la languette de court-circuit dans une condition normale et étant déformable en contact avec la languette de court-circuit pour raccorder électriquement les première et seconde électrodes (11, 12),
**caractérisée en ce que** :
la première plaque (111), le fusible (60), la seconde plaque (112) et la languette de court-circuit (51, 51') sont formés de manière solidaire avec une pièce unitaire en tôle,
le fusible (60) étant formé comme une partie fléchie raccordant des extrémités de la première plaque (111) et de la seconde plaque (112), le fusible ayant une largeur plus étroite que celle de la première plaque et de la seconde plaque.

2. Batterie rechargeable selon la revendication 1, dans laquelle la plaque de capuchon (20) est électriquement raccordée à la seconde électrode (12) et la plaque de court-circuit (52) est encastrée dans la plaque de capuchon.

3. Batterie rechargeable selon la revendication 1 ou 2, dans laquelle :
la première plaque (111), la seconde plaque (112), le fusible (60), la languette de court-circuit (51, 51') et l'isolant (43) constituent un module externe qui est disposé à l'extérieur de la plaque de capuchon (15).

4. Batterie rechargeable selon l'une des revendications 1 à 3, dans laquelle :
la borne de rivet (21a), un élément isolant (41) et une première languette de connexion (31) constituent un module interne qui est disposé à l'intérieur de la plaque de capuchon (15).

5. Batterie rechargeable selon l'une des revendications 1 à 4, dans laquelle le fusible (60) est disposé à l'extérieur du boîtier (15).

6. Batterie rechargeable selon l'une des revendications 1 à 5, dans laquelle le fusible (60) fait partie de l'élément de borne d'électrode (21c).
